(19) Europäisches Patentamt
European Patent Office
Office européen des brevets

(11) **EP 2 278 605 A1**

(12) **DEMANDE DE BREVET EUROPEEN**

(43) Date de publication:
**26.01.2011 Bulletin 2011/04**

(51) Int Cl.:
*H01H 83/10* [(2006.01)]   *H02H 9/04* [(2006.01)]
*H01H 85/44* [(2006.01)]   *H01H 85/46* [(2006.01)]

(21) Numéro de dépôt: **10170098.7**

(22) Date de dépôt: **20.07.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **21.07.2009 FR 0903585**

(71) Demandeur: **ABB France**
**92566 Rueil-Malmaison Cedex (FR)**

(72) Inventeurs:
• **Ducourneau, Jean-Bernard**
  **65310 Horgues (FR)**
• **Brescon, Stéphane**
  **65200 Bagneres de Bigorre (FR)**

(74) Mandataire: **Hirsch & Associés**
**58, avenue Marceau**
**75008 Paris (FR)**

(54) **Dispositif de protection d'une installation électrique contre des surtensions transitoires**

(57)    Le dispositif de protection (11) destiné à protéger une installation électrique (Ph, N) contre des surtensions transitoires, comprend au moins une varistance (15) et un déconnecteur (12) pour la déconnecter sur court-circuit de celle-ci. Un pôle (151) de la varistance (15) est relié à l'installation électrique par le biais d'au moins deux branches reliées en parallèle entre elles et entre lesquelles le courant se divise. Le déconnecteur comprend, pour au moins une de ces branches, des moyens (13) sensibles au courant traversant cette branche pour provoquer ladite déconnexion en cas de défaillance par court-circuit de la varistance. Il peut s'agir d'un ou plusieurs disjoncteurs ou de fusibles. Ces moyens présentent une insensibilité aux surintensités transitoires du courant traversant ladite branche jusqu'à un certain niveau. Le fait d'opérer sur une branche et donc sur une partie du courant traversant la varistance assure une plus grande insensibilité du déconnecteur aux courants transitoires.

Fig. 3

## Description

La présente invention concerne un dispositif de protection d'une installation électrique contre des surtensions transitoires, notamment dues à des coups de foudre. Ce type de dispositif est encore appelé parafoudre. Plus particulièrement, l'invention concerne de tels dispositifs de protection qui comprennent une ou plusieurs varistances pour limiter la tension appliquée à l'installation électrique en cas de surtensions transitoires. Plus particulièrement encore, l'invention a trait aux dispositifs de protection destinés aux installations électriques basse tension.

Généralement, ces dispositifs de protection comprennent une varistance laquelle est branchée entre la phase et le neutre du réseau électrique alimentant l'installation à protéger dans le cas d'une installation monophasée. Dans le cas d'une installation triphasée ou polyphasée, ces dispositifs comprennent plusieurs varistances de sorte qu'une varistance respective est branchée entre chaque phase et le neutre du réseau électrique alimentant l'installation à protéger. Alternativement ou respectif, il peut être prévu une varistance entre chaque couple de phases. Par ailleurs, ces dispositifs comprennent généralement un éclateur connecté entre le neutre et la terre. Comme cela est connu, en fonctionnement normal, la ou les varistances sont non passantes ou bloquées, autrement dit elles présentent une résistance électrique élevée. Au contraire, en cas de surtension transitoire apparaissant sur le réseau d'alimentation, la ou les varistances ont leur résistance électrique qui diminue et deviennent passantes, ce qui permet ainsi de limiter la surtension entre les lignes électriques auxquelles elles sont connectées. La ou les varistances sont alors traversées par un courant transitoire pouvant être très élevé. Lorsque la tension sur le réseau d'alimentation redevient normale, la varistance revient à l'état non passant. L'exemple typique de surtension transitoire est celle due à un coup de foudre d'abattant sur une ou plusieurs lignes du réseau électrique d'alimentation ou à proximité de celles-ci. Le courant transitoire qui traverse la ou les varistances dans ce cas est appelé courant de foudre.

En utilisation, la ou les varistances des dispositifs de protection peuvent se détériorer, essentiellement en raison des courants de foudre qu'elles ont écoulés, voir devenir défaillantes. Il existe deux modes principaux de défaillance des varistances : le court-circuit et l'emballement thermique.

Une varistance peut se mettre en court circuit permanent, par exemple suite à un courant de foudre trop élevé. Dans ce cas, il s'établit un courant de court circuit à travers la varistance qui est fourni par les lignes du réseau électrique entre lesquelles elle est branchée. Ce courant de court circuit dure jusqu'à ce qu'il soit coupé, par exemple par un appareil de coupure. Pour cette raison, les normes telles que la norme internationale IEC 61643-1 prévoient que les parafoudres soient pourvus d'une protection contre les surintensités, aussi appelée déconnecteur en cas de court-circuit, qui a pour fonction de déconnecter la varistance du réseau électrique en cas de défaillance par court-circuit de celle-ci.

L'emballement thermique correspond au cas de l'échauffement excessif de la varistance lié au courant de fuite à travers la varistance alors qu'elle est à l'état non passant, autrement dit lorsque le réseau électrique auquel elle est connectée est sous tension nominale et en l'absence de surtensions. Cet échauffement excessif de la varistance est dû à l'augmentation du courant de fuite - généralement quelques dizaines de milliampères - en raison du vieillissement de la varistance, notamment en raison des courants de foudre qu'elle a écoulés. Du fait du danger que représente cet échauffement, les normes telles que la norme internationale IEC 61643-1 prévoient que les dispositifs de protection contre les surtensions soient pourvus d'une protection contre l'emballement thermique, encore appelée déconnecteur thermique. Le déconnecteur thermique a pour fonction de déconnecter la varistance du réseau électrique lorsque cette dernière est en situation d'emballement thermique. Par exemple, il peut être prévu que le déconnecteur thermique déconnecte la varistance du réseau électrique lorsque la température de la varistance dépasse 150°C.

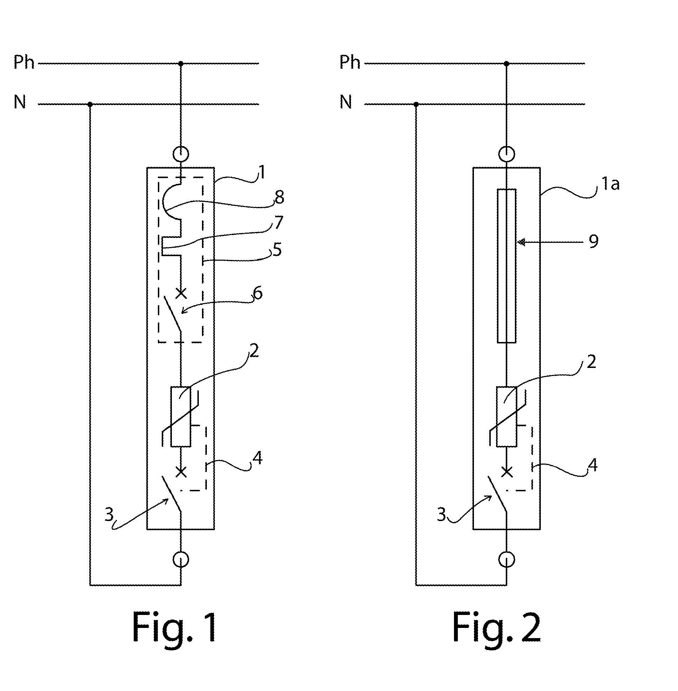

Les figures 1 et 2 présentent deux schémas électriques de dispositifs de protection 1 et 1a classiquement utilisés dans l'art antérieur. Dans les deux cas, le dispositif de protection est branché, à titre d'exemple, entre une phase Ph et le neutre N d'un réseau électrique d'alimentation de l'installation à protéger contre les surtensions transitoires. Le dispositif de protection comprend une varistance 2 branchée entre la phase et le neutre du réseau électrique par le biais d'un déconnecteur thermique et d'un déconnecteur en cas de court-circuit.

Le déconnecteur thermique comprend un contact 3 fermé en condition normale de fonctionnement de la varistance 2 et dont l'ouverture est commandée sur détection d'un emballement thermique de la varistance 2. La détection de l'emballement thermique est symbolisée par la liaison 4 en pointillée sur les figures 1 et 2. L'ouverture du contact 3 déconnecte alors la varistance 2 du réseau électrique. Le déconnecteur thermique consiste souvent en une ou plusieurs soudures basse température maintenant en place un élément contraint élastiquement, la fusion de la ou des soudures permettant le déplacement de cet élément avec pour effet d'ouvrir le circuit de la varistance. Des protections thermiques de ce type sont décrites notamment dans EP-A-0 716 493, EP-A-0 987 803 et EP-A-0 905 839. Parfois, la protection thermique est aussi basée sur une mesure électronique du courant traversant la varistance comme décrit par exemple dans FR-A-2 873 510.

Dans le cas de la figure 1, le déconnecteur en cas de court-circuit est un disjoncteur magnétothermique unipolaire 5. Le disjoncteur comprend classiquement un organe de coupure ou contact 6 dont l'ouverture est commandée par un déclencheur thermique 7 et un déclencheur magnétique 8 qui ont pour fonction de détecter une surintensité traversant le disjoncteur 5. Dans la suite, on désignera aussi par déclencheur magnétothermique l'ensemble constitué par le déclencheur thermique et le déclencheur magnétique. Le contact 6 du disjoncteur 5 est fermé en condition normale de fonctionnement de la varistance 2. En cas de défaillance par court-circuit de la varistance 2, le déclencheur thermique 8 ou le déclencheur magnétique 7 selon le cas provoque l'ouverture du contact 6. L'ouverture du contact 6 déconnecte alors la varistance 2 du réseau électrique.

En variante à la figure 1, il est connu de EP-A-1 447 831 et de EP-A-1 607 995 des dispositifs de protection dans lequel le déconnecteur thermique provoque aussi l'ouverture du disjoncteur servant de déconnecteur en cas de court-circuit. De tels dispositifs sont aussi décrits dans la demande internationale PCT/FR2008/001777.

Dans le cas de la figure 2, le déconnecteur en cas de court-circuit est un fusible 9. En cas de défaillance de la varistance 2 sous forme de court-circuit, le fusible 9 fond, ce qui a pour effet de déconnecter la varistance 2 du réseau électrique.

Dans le cas où le dispositif de protection est soumis à une surtension transitoire qui n'excède pas les valeurs limites pour lesquelles il est prévues, le déconnecteur thermique et le déconnecteur en cas de court-circuit doivent rester fermés - c'est-à-dire ne pas déconnecter la varistance 2 - pour que la varistance 2 puisse jouer son rôle de protection contre la surtension transitoire.

Le choix du déconnecteur en cas de court-circuit pose difficulté en pratique du fait qu'il doive répondre à des contraintes contradictoires. En effet, il doit déconnecter fiablement la varistance 2 du réseau électrique en cas de défaillance par court-circuit de celle-ci tout en ne déconnectant pas la varistance 2 lorsqu'elle est traversée par un courant de foudre. Un courant de foudre a pour caractéristique d'être très élevé - généralement très supérieur au courant de court circuit en cas de défaillance par court circuit de la varistance - mais est de très courte durée.

Ainsi, pour les déconnecteurs en cas de court-circuit à base de disjoncteur comme dans la figure 1, le disjoncteur 5 doit pouvoir répondre à ces deux exigences contradictoires. Cela impose, d'une part, de choisir de façon adéquate le courant nominal In et la courbe de fonctionnement caractérisant le disjoncteur 5 pour assurer une déconnexion efficace en cas de défaillance par court-circuit de la varistance 2. De plus, il est souhaitable que le disjoncteur 5 assure la déconnexion suffisamment rapidement pour éviter que les organes de coupure généraux du réseau électrique ne coupent l'alimentation de celui-ci et donc de l'installation électrique. Pour des parafoudres basse tension, le courant nominal In du disjoncteur 5 est généralement compris entre 32 A et 100 A. Il faut aussi que le pouvoir de coupure du disjoncteur 5 soit adapté au courant maximal de court circuit auquel peut être soumis le dispositif de protection, et qui dépend essentiellement du courant de court-circuit du transformateur alimentant le réseau électrique auquel est branché le dispositif de protection. Ce dernier est, selon le cas, de quelques centaines d'ampères à quelques kiloampères.

D'autre part, le disjoncteur 5 ne doit pas déconnecter la varistance 2 lorsque le dispositif de protection est traversé par un courant de foudre qui ne dépasse pas le niveau d'intensité pour lequel il est prévu. En pratique, les normes telles que la norme internationale IEC 61643-1 applicable aux parafoudres basse tension, prévoient que les dispositifs de protection contre les surtensions transitoires soient testés avec des ondes de courant 8/20 ou 10/350 selon le cas, avec des valeurs de courant - désignés par courant maximal de décharge $Imax$ ou courant de choc $Iimp$ selon le cas dans la norme IEC 61643-1 - qui sont choisies selon le niveau que le dispositif de protection doit pouvoir écouler. Il est rappelé que ces deux nombres caractérisent conventionnellement, en microsecondes, le temps de montée et de descente de l'onde de courant. En pratique, la valeur maximale du courant peut être de plusieurs dizaines de kiloampères.

Les disjoncteurs existants sur le marché ne sont pas spécifiquement conçus et testés pour permettre de laisser passer des surintensités transitoires qui correspondent à des courants de type courant de foudre. Ils présentent cependant une certaine insensibilité aux surintensités transitoires, c'est-à-dire que le déclenchement n'intervient que pour des surintensités transitoires dépassant un certain niveau. C'est le cas notamment des disjoncteurs magnétiques ou magnétothermiques.

Mais en pratique, il est extrêmement difficile de trouver des disjoncteurs qui permettent de satisfaire à ces deux exigences contradictoires dès lors que le dispositif de protection doit être testé avec un courant de choc $Iimp$ ou un courant maximal de décharge $Imax$ très élevé. C'est le cas notamment lorsque le dispositif de protection est testé en onde de courant 8/20 avec un courant maximal de décharge $Imax$ de 20 kiloampères ou plus.

Par ailleurs, le développement d'un nouveau disjoncteur particulièrement adapté à ces exigences contradictoires s'avère délicat et serait onéreux compte tenu des quantités relativement faibles à produire. Un autre inconvénient réside dans le fait que le contact 6 à l'état fermé, le déclencheur thermique 7 et le déclencheur magnétique 8 présentent une certaine impédance - bien qu'elle soit faible - au passage du courant de foudre. De ce fait, le disjoncteur 5 crée une chute de tension à ses bornes lors du passage du courant de foudre qui est d'autant plus important que la valeur maximale du courant est élevée. Par conséquent, le niveau de protection en tension du dispositif de protection - désigné par $Up$ dans la norme IEC 61643-1 - est dégradé du fait de cette chute de tension aux bornes du disjoncteur 5 qui vient s'ajouter au niveau de protection en tension qui est propre à la varistance 2.

EP-A-350 477 propose une solution basée sur un disjoncteur modifié utilisant un élément de temporisation pour éviter les ouvertures intempestives en cas de surintensités transitoires. En particulier, dans les modes de réalisation des figures 9 et 11, le déconnecteur est basé sur un disjoncteur modifié à quatre pôles, respectivement trois pôles, reliés en parallèle entre eux. Chaque pôle comprend une bobine primaire respective d'un transformateur et un contact disposés en série. Les bobines primaires sont couplées avec une bobine secondaire commune du transformateur. La bobine secondaire alimente un relais de déclenchement prévu pour provoquer l'ouverture des contacts des pôles en cas de surintensité du courant. Le circuit de la bobine secondaire comprend un élément de temporisation pour éviter une ouverture intempestive des contacts en cas de surintensités transitoires. AT-B-405 777 décrit un déconnecteur similaire en relation avec sa figure 8.

Pour les déconnecteurs en cas de court-circuit à base de fusible comme dans la figure 2, le fusible 9 doit aussi répondre aux deux exigences contradictoires précitées, à savoir fondre suffisamment rapidement pour déconnecter la varistance 2 du réseau électrique en cas de défaillance par court-circuit de celle-ci, mais ne pas fondre lorsqu'il est traversé par un courant de foudre d'un niveau n'excédant pas celui pour lequel le dispositif de protection est prévu. De ce fait, il existe pour ces dispositifs de protection des difficultés similaires à ceux à base de disjoncteur.

Il est connu par exemple de DE-A-10 2006 034404 un dispositif de protection contre les surintensités de courant à base de fusibles et destiné à être utilisé dans des dispositifs de protection contre les surtensions. Le dispositif de protection contre les surintensités de courant est basé sur la combinaison d'un fusible apte à être traversé par des courants de pointe et un fusible de signalisation comprenant un percuteur, les deux fusibles étant montés en parallèle. La constitution des deux fusibles est très différente. Le premier assure l'écoulement quasi-intégral des courants de pointe. Au contraire, le deuxième fusible n'est quasiment pas sollicité par les courants de pointe et ne présente pas d'aptitude à écouler un tel courant de pointe, en particulier un courant de foudre. Là-encore, l'insensibilité aux surintensités transitoires est donc limitée par le premier fusible qui assure quasi-intégralement l'écoulement de ceux-ci.

Le but de la présente invention est de pallier au moins partiellement les inconvénients précités. Plus particulièrement, l'invention vise à permettre aux dispositifs de protection contre les surtensions transitoires à écouler des ondes de courant plus élevés, et ce de façon simple et fiable.

A cette fin, la présente invention propose un dispositif de protection destiné à protéger une installation électrique contre des surtensions transitoires, comprenant :

- deux moyens de connexion pour connecter le dispositif de protection à l'installation électrique ;
- au moins une varistance présentant deux pôles reliés chacun à l'un respectif des deux moyens de connexion ;
- un déconnecteur pour provoquer la déconnexion d'au moins l'un des deux pôles de la varistance du moyen de connexion respectif en cas de défaillance par court-circuit de la varistance ;

dans lequel :

- l'un des deux pôles de la varistance est relié au moyen de connexion respectif par le biais d'au moins deux branches reliées en parallèle entre elles pour que le courant traversant la varistance se divise entre ces branches ; et
- le déconnecteur comprend, pour au moins une de ces branches, des moyens sensibles au courant traversant cette branche pour provoquer ladite déconnexion en considération seulement du courant traversant cette branche, ces moyens provoquant la déconnexion en cas de surintensité du courant traversant cette branche correspondant à une défaillance par court-circuit de la varistance, ces moyens présentant une insensibilité aux surintensités transitoires du courant traversant ladite branche jusqu'à un certain niveau.

Suivant un premier mode de réalisation préféré:

- le déconnecteur comprend au moins un contact électrique, l'un des deux pôles de la varistance étant relié au moyen de connexion respectif par le biais dudit au moins un contact électrique, ledit au moins un contact électrique étant susceptible de passer d'une position fermée à une position ouverte pour déconnecter ledit pôle du moyen de connexion respectif, ledit au moins un contact électrique étant apte à couper le courant traversant ladite au moins une varistance en cas de défaillance par court circuit de la varistance, et
- pour ladite au moins une de ces branches, les moyens sensibles à l'intensité du courant traversant cette branche sont des moyens de détection de surintensité du courant électrique traversant cette branche correspondant à une défaillance par court-circuit de la varistance, les moyens de détection étant prévus pour faire passer ledit au moins un contact électrique dans la position ouverte en cas de détection de surintensité, les moyens de détection présentant ladite insensibilité aux surintensités transitoires pour ne faire passer ledit au moins un contact électrique à la position ouverte que si les surintensités transitoires du courant traversant cette branche dépassent ledit certain niveau.

Dans le cadre de ce premier mode de réalisation, l'invention peut comprendre en outre une ou plusieurs des caractéristiques suivantes :

- un tel contact électrique est disposé dans chacune desdites au moins deux branches, les moyens de détection étant prévus pour faire passer lesdits contacts électriques dans la position ouverte pour déconnecter ledit pôle du moyen de connexion respectif en cas de détection d'une surintensité du courant électrique dans ladite au moins une de ces branches ;
- de tels moyens de détection de surintensité du courant électrique sont prévus pour chacune desdites au moins deux branches, lesdits moyens de détection de chacune desdites au moins deux branches étant prévus pour faire passer le contact électrique disposé dans ladite branche dans la position ouverte en cas de détection d'une surintensité du courant électrique dans ladite branche;
- le déconnecteur comprend de tels moyens de détection de surintensité du courant électrique que pour une seule desdites au moins deux branches, les moyens de détection étant prévus pour faire passer lesdits contacts électriques dans la position ouverte pour déconnecter ledit pôle du moyen de connexion respectif en cas de détection d'une surintensité du courant électrique dans ladite branche;
- au moins une parmi lesdites au moins deux branches peut ne comprendre que ledit contact électrique disposé dans cette branche ;
- au moins une parmi lesdites au moins deux branches est dépourvue de tels moyens de détection de surintensité du courant électrique et comprend un élément disposé en série avec le contact électrique disposé dans cette branche, ledit élément présentant une impédance ;
- cette impédance est choisie pour que ladite branche comprenant cet élément, présente globalement une valeur d'inductance moindre que ladite branche comprenant de tels moyens de détection de surintensité du courant électrique ;
- un dit contact électrique est agencé en série avec la varistance pour déconnecter ledit pole du moyen de connexion respectif en passant de la position fermée à la position ouverte, le dispositif comprenant des moyens de détection de surintensité du courant électrique que pour une seule desdites branches, lesdits moyens de détection étant prévus pour faire passer ledit contact électrique dans la position ouverte en cas de détection d'une surintensité ;
- le dispositif comprend un deuxième déconnecteur pour déconnecter l'un des pôles de la varistance du moyen de connexion respectif en cas d'emballement thermique de la varistance ;
- le deuxième déconnecteur est prévu pour déconnecter l'un des pôles de la varistance du moyen de connexion respectif en cas d'emballement thermique de la varistance en faisant passer ledit au moins un contact électrique à la position ouverte ;
- le premier déconnecteur comprend au moins un disjoncteur et optionnellement au moins un interrupteur couplé mécaniquement au disjoncteur pour que le déclenchement du disjoncteur provoque l'ouverture dudit au moins un interrupteur, et dans lequel :

  - pour chacune desdites au moins deux branches comprenant de tels moyens de détection de surintensité, lesdits moyens de détection de surintensité de courant électrique constituent le déclencheur d'un organe de coupure d'un pôle du disjoncteur ; et
  - ledit au moins un contact électrique :

    • soit constitue un organe de coupure d'un pôle du disjoncteur ;
    • soit fait partie d'un pôle correspondant dudit au moins un interrupteur.

- pour chacune desdites au moins deux branches comprenant de tels moyens de détection de surintensité, le disjoncteur présente un pôle correspondant protégé par un déclencheur et un organe de coupure, le déclencheur étant constitué par lesdits moyens de détection de surintensité et l'organe de coupure étant constitué par le contact électrique disposé dans cette branche, et pour chacune desdites au moins deux branches dépourvue de tels moyens de détection de surintensité, le contact électrique de cette branche soit constitue l'organe de coupure d'un pôle correspondant du disjoncteur, soit fait partie d'un pôle correspondant dudit au moins un interrupteur ;
- le dispositif comprend un premier boîtier logeant ladite au moins une varistance et le cas échéant le deuxième déconnecteur, dans lequel ledit au moins un disjoncteur a un deuxième boîtier propre et le cas échéant, ledit au moins un interrupteur a un troisième boîtier propre, lesdits boîtiers étant couplés mécaniquement ensemble, lesdits boîtiers présentant chacun des moyens d'interconnexion électrique pour connecter électriquement entre eux ladite au moins une varistance, ledit au moins un disjoncteur et le cas échéant ledit au moins un interrupteur.

Suivant un deuxième mode de réalisation préféré, pour ladite au moins une de ces branches, les moyens sensibles à l'intensité du courant traversant cette branche est un fusible. Dans ce cas, il peut être prévu qu'un tel fusible soit disposé dans chacune desdites au moins deux branches, la fusion desdits fusibles provoquant ladite déconnexion d'au moins l'un des deux pôles de la varistance du moyen de connexion respectif en cas de défaillance par court-circuit de la varistance. Avantageusement, chacun des fusibles utilisés est un fusible apte à être traversé par un courant de foudre.

Suivant un troisième mode de réalisation préféré, le dispositif de protection est prévu comme suit :

- pour au moins une desdites branches, lesdits moyens sensibles à l'intensité du courant traversant cette branche sont un fusible ; la fusion du fusible empêchant le passage du courant à travers cette branche ;
- le déconnecteur comprend au moins un contact électrique susceptible de passer d'une position fermée à une position ouverte, ledit au moins un contact électrique étant disposé dans une autre desdites branches ou en série avec la varistance ; et
- pour au moins une desdites branches, les moyens sensibles à l'intensité du courant traversant cette branche sont des moyens de détection de surintensité du courant électrique traversant cette branche correspondant à une défaillance par court-circuit de la varistance, les moyens de détection étant prévus pour faire passer ledit au moins un contact électrique dans la position ouverte en cas de détection de surintensité, les moyens de détection présentant ladite insensibilité aux surintensités transitoires pour ne faire passer ledit au moins un contact électrique à la position ouverte que si les surintensités transitoires du courant traversant cette branche dépassent ledit certain niveau, lesdits moyens de détection étant soit distinct dudit fusible, soit constitué par ledit fusible.

De façon générale, le dispositif de l'invention est préférentiellement un parafoudre basse tension au sens de la norme IEC 61643-1, autrement dit un parafoudre pour protéger des équipements alimentés sous une tension alternative 50 ou 60 Hz inférieure ou égale à 1000 Volts ou sous tension continue inférieure ou égale à 1 500 V. Le parafoudre peut avantageusement être prévu pour pouvoir écouler un courant maximal de décharge *Imax* d'au moins 10 kA, plus préférablement d'au moins 20kA et plus avantageusement encore d'au moins 30kA sous onde de courant 8/20 conformément à la norme IEC 61643-1.

D'autres caractéristiques et avantages de l'invention apparaîtront à la lecture de la description qui suit de modes de réalisation préférés de l'invention donnés à titre d'exemple non limitatif et en référence au dessin annexé, les éléments identiques dans les différentes figures portant les mêmes numéros de référence.

Les figures 1 et 2, déjà décrites, représentent chacun un schéma électrique d'un dispositif de protection d'une installation contre les surtensions de l'art antérieur.

Les figures 3 à 7 représentent chacune le schéma électrique d'un dispositif de protection d'une installation contre les surtensions selon différents modes de réalisation de l'invention.

Le dispositif de protection destiné à protéger une installation électrique contre des surtensions transitoires, comprend deux moyens de connexion pour connecter le dispositif de protection à l'installation électrique. Il comprend au moins une varistance présentant deux pôles reliés chacun à l'un respectif des deux moyens de connexion. Il peut s'agir d'une seule varistance. Alternativement, il peut s'agir de plusieurs varistances reliées entre elles en série et/ou en parallèle pour former un bloc à deux pôles reliés chacun à l'un respectif des deux moyens de connexion. Dans les différents modes de réalisation décrits dans la suite, l'on comprendra que la référence à une varistance couvre aussi un tel bloc de varistances.

Le dispositif de protection comprend encore un déconnecteur en cas de court-circuit, autrement dit un déconnecteur prévu pour provoquer la déconnexion d'au moins l'un des deux pôles de la varistance du moyen de connexion respectif en cas de défaillance par court-circuit de la varistance.

Plus précisément, l'un des deux pôles de la varistance est relié au moyen de connexion respectif par le biais d'au moins deux branches reliées en parallèle entre elles, ces branches étant conçues pour que le courant traversant la varistance se divise entre elles. Autrement dit, chacune des branches est traversée par une partie non nulle du courant traversant la varistance.

Le déconnecteur en cas de court-circuit comprend, pour au moins une de ces branches, des moyens sensibles au courant traversant cette branche pour provoquer la déconnexion précitée en cas de surintensité du courant traversant cette branche correspondant à une défaillance par court-circuit de la varistance. La défaillance par court-circuit de la varistance a pour effet l'établissement du courant de court-circuit à travers la varistance, ce qui a pour corollaire que la ou chaque branche pour laquelle il est prévu des moyens sensibles au courant qui y passe, est traversée par une fraction donnée du courant de court-circuit. Cette fraction dépend de l'impédance des différentes branches précitées puisqu'elles sont reliées en parallèle entre elles. Cette fraction de courant de court-circuit est très supérieure au courant traversant la même branche lorsque la varistance est en bon état de fonctionnement et le réseau électrique sous condition normale de tension nominale. En effet, ce dernier courant correspond alors à cette même fraction, mais du courant de fuite éventuel de la varistance qui n'est que de l'ordre de quelques milliampères. Par conséquent, il suffit de fixer un seuil pour le courant dans cette branche - ou dans chacune de ces branches - choisi pour que son dépassement soit indicatif d'une situation de surintensité de ce courant correspondant à une défaillance par court-circuit de la varistance. En cas de dépassement, les moyens sensibles au courant provoquent la déconnexion de la varistance.

Cependant, ces moyens sensibles au courant qui sont prévues pour au moins une de ces branches, présentent une insensibilité aux surintensités transitoires du courant traversant ladite branche jusqu'à un certain niveau. Autrement dit, ces moyens sensibles au courant ne provoquent pas la déconnexion de la varistance malgré que le courant dans la branche correspondante présente une surintensité transitoire qui dépasse le seuil précité dès lors que cette surintensité transitoire ne dépasse pas un certain niveau. Cette insensibilité concerne en particulier les surintensités transitoires dues aux courants de foudre et plus particulièrement encore les ondes de courant 8/20 ou 10/350 prévus par la norme IEC 61643-1 pour tester les dispositifs de protection contre les surtensions transitoires.

Ces moyens sensibles au courant peuvent avantageusement être le ou les déclencheurs d'un ou plusieurs disjoncteurs ou encore un ou plusieurs fusibles tels que ceux utilisés dans l'art antérieur. Bien entendu, pour assurer la déconnexion d'au moins l'un des deux pôles de la varistance du moyen de connexion respectif, le déconnecteur comprend des moyens de coupure de courant quelconque qui sont appropriés pour interrompre le courant traversant la varistance. Ces moyens de coupure peuvent être fournis par le ou les disjoncteurs, voire aussi par un ou plusieurs interrupteurs couplés mécaniquement au(x) disjoncteur(s) ou encore par le ou les fusibles.

Lorsqu'il est recouru à un ou plusieurs fusibles, il est avantageux que chacun soit apte à être traversé par un courant de foudre, c'est-à-dire sans fondre jusqu'à un certain niveau de surintensité transitoire. Autrement dit, chacun des fusibles serait apte à être utilisé à lui seul comme déconnecteur en cas de défaillance par court-circuit de la varistance à la façon de l'art antérieur de la figure 2 car il présente une insensibilité suffisante aux surintensités transitoires pour être traversé par un courant de foudre sans fondre. De préférence, chaque fusible utilisé est apte à être traversé sans fondre par un courant de foudre modélisé par une onde de courant 8/20 avec un courant maximal de décharge *Imax* d'au moins 1kA au sens de la norme IEC 61643-1 pour des dispositifs de protection de classe II. Alternativement, chaque fusible utilisé est apte à être traversé sans fondre par un courant de foudre modélisé par une onde de courant 10/350 avec un courant de choc *Iimp* d'au moins 1kA au sens de la norme IEC 61643-1 pour des dispositifs de protection de classe I.

Cette aptitude de chaque fusible autorise le passage d'une fraction non négligeable du courant de foudre dans les branches correspondantes, ce qui augmente significativement l'insensibilité aux surintensités transitoires du déconnecteur ainsi formé par rapport au cas où un tel fusible est utilisé seul (comme dans la figure 2). Pour assurer la répartition souhaitée des courants de foudre dans les différentes branches reliées en parallèle, on choisit les fusibles en considération de leur impédance.

Que le déconnecteur soit uniquement à base de fusibles ou uniquement à base de disjoncteur(s) et éventuellement d'interrupteur(s) accouplés à celui-ci, ou encore d'un mélange des deux, et plus généralement quel que soit son mode de réalisation décrit ci-après ou non, le déconnecteur est de préférence conçu, s'agissant d'un dispositif de classe II, pour assurer une répartition du courant de foudre modélisé en onde 8/20 pour que chacune des branches soit traversée par une partie de courant correspondant à :

$$Imax/\mathrm{n} \ +/- \ 0,75 \ Imax/\mathrm{n}$$

et plus préférentiellement à :

$$Imax/\mathrm{n} \ +/- \ 0,5 \ Imax/\mathrm{n}$$

avec :

- *Imax* : le courant maximal de décharge en onde 8/20 conformément à la norme IEC 61643-1 prescrit pour le dispositif de protection contre les surtensions en cause ; et
- n : le nombre de branches reliées en parallèle entre elles à travers lesquelles le courant se divise.

Alternativement, le déconnecteur est de préférence conçu, s'agissant d'un dispositif de classe I, pour assurer une répartition du courant de foudre modélisé en onde 10/350 pour que chacune des branches soit traversée par une partie de courant correspondant à :

$$Iimp/\mathrm{n} \ +/- \ 0,75 \ Iimp/\mathrm{n}$$

et plus préférentiellement à :

$$Iimp/\mathrm{n} \ +/- \ 0,5 \ Iimp/\mathrm{n}$$

avec :

- *Iimp* : le courant de choc en onde 10/350 conformément à la norme IEC 61643-1 prescrit pour le dispositif de protection contre les surtensions en cause ; et
- n : le nombre de branches reliées en parallèle entre elles à travers lesquelles le courant se divise.

Les composants insérés dans chacune des branches - tel que fusible, disjoncteur, interrupteur, impédance additionnelle, etc... - sont avantageusement choisis pour assurer cette répartition.

De manière générale, la mise en oeuvre avec un ou plusieurs disjoncteurs éventuellement couplés à un ou plusieurs interrupteurs est particulièrement adaptée pour des dispositifs testés avec des ondes de courant 8/20 et des disjoncteurs standards peuvent être utilisés dans ce cas. Pour le cas des dispositifs testés avec des ondes de courant 10/350, la mise en oeuvre avec des fusibles est préférable car le choix du ou des disjoncteurs est plus délicat. Alternativement, il peut aussi être envisagé de développer un disjoncteur spécifique à cette fin.

Ce déconnecteur en cas de court-circuit est amélioré par rapport à l'art antérieur décrit en relation avec les figures 1 et 2. En effet, les moyens sensibles au courant provoquent la déconnexion en considération non pas du courant total traversant la varistance, mais seulement d'une partie de ce courant. De ce fait, ce déconnecteur en cas de court-circuit permet comparativement de laisser passer une surintensité transitoire, en particulier un courant de foudre, plus élevé sans tenter de déconnecter la varistance. Cependant, le déconnecteur conserve toute son efficacité en cas de défaillance par court-circuit de la varistance.

De plus, dans le cas où ces moyens sensibles au courant présentent une certaine impédance faisant obstacle au passage du courant comme dans le cas d'un déclencheur thermique et d'un déclencheur magnétique d'un disjoncteur classique, le fait que le dispositif de protection comporte deux branches ou plus reliées en parallèle entre elles est avantageux. En effet, l'impédance équivalente du dispositif de protection est diminuée par rapport au cas de l'art antérieur où les moyens sensibles au courant sont prévus pour une branche qui est la seule à relier le pôle concerné de la varistance au moyen de connexion correspondant. De ce fait, le niveau de protection en tension Up du dispositif de protection est comparativement amélioré puisque la chute de tension aux bornes du dispositif de protection est plus faible.

Comme nous le verrons, le dispositif de protection peut être mis en oeuvre de façon simple et peu coûteuse. En particulier, il peut être mis en oeuvre avec un ou plusieurs disjoncteurs et éventuellement un ou plusieurs interrupteurs associés aux disjoncteurs pour que le déclenchement du disjoncteur provoque l'ouverture de ce ou ces derniers. Il peut avantageusement s'agir de disjoncteurs et d'interrupteurs classiques existants sur le marché sans aucune modification ou adaptation de ceux-ci.

Le déconnecteur en cas de court-circuit se distingue de l'art antérieur des figures 9 et 11 de EP-A-0 350 477 et la figure 8 de AT-B-405 777, précédemment cités. En effet, dans ces derniers cas, malgré la division du courant traversant la varistance entre les différents pôles du disjoncteur, le fait que les bobines primaires des différents pôles soient couplés avec une bobine secondaire commune qui commande la déconnexion, a pour effet que la déconnexion se produit en considération du courant total traversant la varistance contrairement au cas de l'invention.

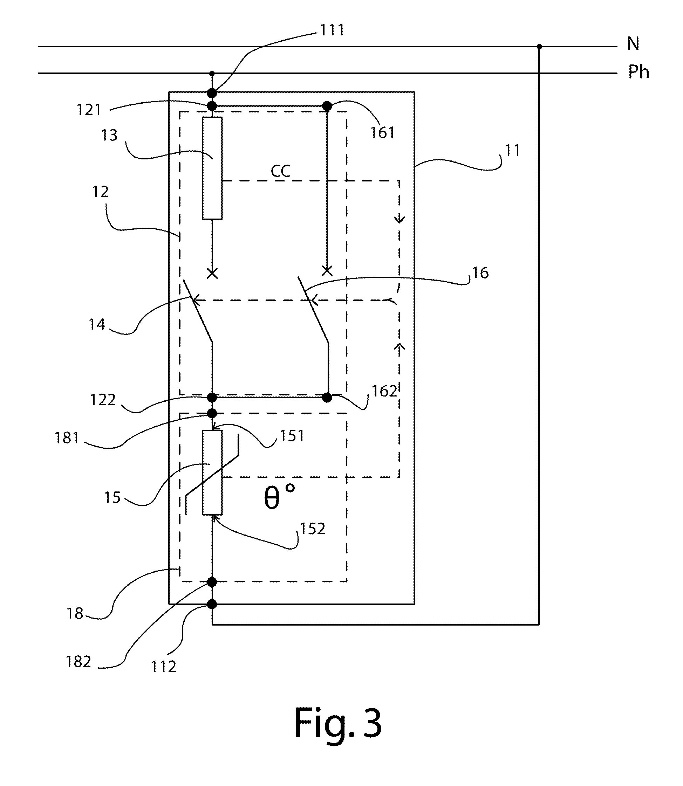

La figure 3 représente un dispositif de protection 11 d'une installation contre les surtensions transitoires selon un premier mode de réalisation. Le dispositif de protection 11 comprend un premier moyen de connexion 111 et un second moyen de connexion 112 grâce auxquels il est relié, dans l'exemple illustré, à une phase Ph et à un neutre N du réseau électrique d'alimentation de l'installation électrique à protéger. Ces premier et second moyens de connexion 111, 112 peuvent être de tout type approprié tel que des bornes à vis montées sur un boîtier du dispositif de protection 11.

Le dispositif de protection 11 comprend une varistance 15 présentant deux pôles 151 et 152. Le deuxième pôle 152 de la varistance 15 est relié directement au deuxième moyen de connexion 112 du dispositif de protection 11. En revanche, le premier pôle 151 de la varistance 15 est relié au premier moyen de connexion 111 du dispositif de protection 11 par le biais de deux branches reliées en parallèle entre elles.

Le déconnecteur en cas de court-circuit est défini par ces deux branches. Une première de ces deux branches comprend un premier contact électrique 14. Des moyens sensibles au courant tels que mentionnés plus haut sont prévus pour cette première branche. En l'occurrence, il s'agit de moyens de détection 13 pour détecter une surintensité du courant électrique traversant cette première branche qui correspond à une défaillance par court-circuit de la varistance 15. La deuxième de ces branches contient uniquement le deuxième contact électrique 16.

En condition normale de fonctionnement du dispositif de protection, les deux contacts 14 et 16 sont fermés. Lorsque le courant traversant la première branche dépasse le seuil indicatif de la défaillance par court-circuit de la varistance 15, les moyens de détection 13 provoquent l'ouverture simultanée des contacts 14 et 16. Il peut être prévu à cette fin que les deux contacts 14 et 16 soient couplés mécaniquement pour qu'ils soient toujours dans la même position, soit fermée, soit ouverte. Cette fonction d'ouverture des contacts 14 et 16 exercée par les moyens de détection 13 est symbolisée par le trait discontinu référencé CC sur la figure 3. Les moyens de détection 13 peuvent comprendre une bobine ou une bobine et un bilame, similairement au cas des déclencheurs magnétiques ou magnétothermiques de disjoncteurs. L'ouverture des contacts 14 et 16 a pour effet de déconnecter le premier pôle 151 de la varistance 15 du premier moyen de connexion 111 du dispositif de protection 11. Mais ces moyens de détection 13 présentent une insensibilité aux surintensités transitoires et de ce fait ils ne font passer les contacts 14 et 16 à la position ouverte que si de telles surintensités transitoires du courant traversant la branche correspondante dépassent un certain niveau.

Ce premier mode de réalisation peut être mis en oeuvre très simplement avec un disjoncteur 12 qui est symbolisé par un rectangle en pointillé. Le disjoncteur 12 est un disjoncteur bipolaire avec un pôle protégé et un pôle coupé non protégé. Il peut s'agir d'un disjoncteur classique disponible dans le commerce. Par pôle protégé, on entend un pôle du disjoncteur pourvu d'un déclencheur opérant sur le courant de ce pôle pour actionner, en cas de surintensité du courant de ce pôle, les organes de coupure de courant de l'ensemble des pôles du disjoncteur. Par pôle coupé non protégé, on entend un pôle du disjoncteur muni d'un organe de coupure de courant, mais dépourvu de déclencheur opérant sur le courant traversant ce pôle. Les moyens de détection 13 sont le déclencheur du pôle protégé du disjoncteur 12 et le contact 14 est l'organe de coupure du pôle protégé du disjoncteur 12. Il peut s'agir classiquement d'un déclencheur magnétique ou d'un déclencheur magnétothermique, ce qui a pour avantage de correspondre aux disjoncteurs les plus économiques et de plus un tel déclencheur présente par nature une insensibilité aux surintensités transitoires du courant. Le contact 16 est l'organe de coupure du pôle coupé non protégé du disjoncteur 12. Le disjoncteur 12 peut classiquement comprendre deux moyens de connexion 121, 122 pour le pôle protégé et deux autres moyens de connexion 161, 162 pour le pôle coupé non protégé. Il peut s'agir classiquement de bornes à vis.

Les moyens de connexion 121 et 161 sont reliés électriquement ensemble et les moyens de connexion 122 et 162 sont reliés électriquement ensemble. Ces liaisons peuvent être réalisés par tous moyens appropriés telles qu'une barrette de connexion respective reliant les deux moyens de connexion concernés à l'extérieur du boîtier du disjoncteur. L'un parmi les moyens de connexion 121 et 161 est relié au moyen de connexion 111 du dispositif de protection 11 qui sert à connecter le dispositif de protection 11 au réseau électrique. Mais en fait, le moyen de connexion 111 du dispositif de protection peut être constitué par l'un ou l'autre des moyens de connexion 121 et 161 du disjoncteur 12.

Par ailleurs, la varistance 15 peut être logée dans un boîtier 18 - représenté symboliquement par un rectangle en pointillé - qui peut aussi loger tout autre composant éventuel du dispositif de protection 11 qui n'est pas compris dans le boîtier du disjoncteur 12. Il est avantageux que le boîtier 18 soit prévu pour être couplé mécaniquement au boîtier du disjoncteur 12, ce qui procure au dispositif de protection 11 une forme de bloc compact facilitant son branchement au réseau. Chaque pôle 151, 152 de la varistance 15 est relié à un moyen de connexion respectif 181, 182, tel qu'une borne à vis, ménagé sur le boîtier 18. Le moyen de connexion 181 est relié électriquement à l'un des moyens de connexion 122 et 162 du disjoncteur 12. Cette liaison peut être réalisée par tout moyen approprié tel qu'une barrette de connexion placée à l'extérieur du boîtier 18 et du boîtier du disjoncteur 12. Il peut notamment être prévue une seule barrette pour relier ensemble les moyens de connexion 122, 162 et 181. Alternativement, cette liaison peut aussi être réalisée par des fils de câblage. Le deuxième moyen de connexion 182 du boîtier 18 est relié au deuxième moyen de connexion 112 du dispositif de protection 11. Mais en fait, le deuxième moyen de connexion 112 du dispositif de protection 12 peut être constitué par le deuxième moyen de connexion 182 du boîtier 18.

Ce premier mode de réalisation peut aussi être mis en oeuvre avec un disjoncteur unipolaire combiné avec un interrupteur unipolaire. Les moyens de détection 13 constituent le déclencheur du disjoncteur tandis que le contact 14 est l'organe de coupure du disjoncteur. Le deuxième contact 16 est celui d'un interrupteur auxiliaire au disjoncteur, c'est-à-dire qui est couplé mécaniquement au disjoncteur pour que son déclenchement provoque simultanément l'ouverture de l'interrupteur. Dans ce cas, le disjoncteur a un boîtier propre tandis que l'interrupteur a aussi un boîtier propre. Le boîtier du disjoncteur présente alors les deux moyens de connexion 121 et 122 et celui de l'interrupteur les deux moyens de connexion 161, 162. Les boîtiers du disjoncteur et de l'interrupteur, ainsi que le boîtier 18 peuvent être couplés mécaniquement ensemble en un seul bloc compact. Les liaisons entre les différents moyens de connexion peuvent être réalisées avec des barrettes ou des fils de câblage comme précédemment.

Le dispositif de protection 11 peut aussi comprendre un déconnecteur thermique. Celui-ci peut être d'un type classique tel que celui décrit en référence à la figure 1 auquel cas le contact 3 du déconnecteur thermique de la figure 1 sera interposé en série avec la varistance 15, soit entre son premier pôle 151 et le premier moyen de connexion 111, soit entre son deuxième pôle 152 et le deuxième moyen de connexion 112. Les composants constituant le déconnecteur thermique peuvent être avantageusement logés dans le boîtier 18. En variante avantageuse, le déconnecteur thermique peut être prévu pour provoquer l'ouverture simultanée des contacts 14 et 16 - soit plus particulièrement pour provoquer le déclenchement du disjoncteur 12 - en cas d'emballement thermique de la varistance 15. Cette variante est représentée symboliquement sur la figure 3 par un trait discontinu référencé θ°. Cette variante peut être mise en oeuvre de la façon décrite dans la demande internationale PCT/FR2008/001777 déposé au nom de la demanderesse ou encore dans EP-A-1 447 831 ou de EP-A-1 607 995.

Le fonctionnement du dispositif de protection 11 est le suivant.

En fonctionnement normal, c'est-à-dire lorsque le réseau électrique fonctionne sous tension nominale et en l'absence de surtension transitoire, les contacts 14 et 16 sont fermés. Plus particulièrement, le disjoncteur 12 est enclenché. La varistance 15 présente une grande résistance électrique et donc aucun courant ne circule à travers la varistance hormis un éventuel courant de fuite qui est très faible, en pratique quelques milliampères. Ce courant de fuite n'est pas suffisant pour que les moyens de détection 13 provoquent l'ouverture des contacts 14 et 16, ou plus particulièrement le déclenchement du disjoncteur 12.

En cas de surtension transitoire apparaissant sur le réseau électrique par exemple en raison d'un coup de foudre, celle-ci va se retrouver aux pôles de la varistance 15 qui devient de ce fait passante. Le dispositif de protection 11 va ainsi assurer, grâce à sa varistance 15, la protection de l'installation en maintenant le niveau de tension du réseau électrique à un niveau acceptable. Le courant de foudre traverse la varistance 15 par le biais des deux branches parallèles entre elles dont l'une contient les moyens de détection de surintensité 13 et le premier contact 14 et l'autre seulement le deuxième contact 16. Plus particulièrement, le courant de foudre se partage entre ces deux branches. Autrement dit, chacune des deux branches est traversée par une partie non nulle du courant de foudre.

Le courant de foudre va se répartir entre ces deux branches dans une proportion qui dépend des impédances respectives des deux branches. L'impédance de la première branche correspond à celle du premier contact 14, augmentée par celle que peut présenter les moyens de détection 13. L'impédance de la deuxième branche correspond exclusivement à celle du deuxième contact 16. En pratique, l'impédance des contacts électriques 14 et 16 est faible, néanmoins elle n'est pas nulle. Par ailleurs, s'agissant notamment de la mise en oeuvre avec un disjoncteur 12 présentant classiquement un déclencheur magnétique ou magnétothermique, les moyens de détection 13 comprennent une bobine, respectivement une bobine et un bilame interposés dans la première branche en série avec le premier contact 14, ces composants présentant une certaine impédance venant s'additionner à celle du premier contact 14.

Les moyens de détection 13 n'opèrent donc pas sur l'intégralité du courant de foudre, mais que sur la partie qui traverse la première branche. Par conséquent, les moyens de détection 13 ne vont tenter de provoquer l'ouverture des contacts 14 et 16, et plus particulièrement le déclenchement du disjoncteur 12, que si cette partie du courant de foudre traversant la première branche dépasse son niveau d'insensibilité aux surintensités transitoires. Il en résulte que le dispositif de protection 11 peut écouler un courant de foudre plus élevé sans que le disjoncteur 12 ne tente de se déclencher comparativement à l'art antérieur illustré à la figure 1. En pratique, la répartition du courant de foudre est de l'ordre de 20 à 30% pour la première branche et donc 70 à 80 % pour la deuxième branche.

Par ailleurs, la fonction de déconnexion de la varistance 15 en cas de court circuit de celle-ci est également fournie de façon fiable. Là encore, le courant de court-circuit va se répartir entre les deux branches dans une proportion qui dépend des impédances respectives des deux branches. En effet, comme déjà mentionné, les moyens de détection 13 provoquent l'ouverture des contacts 14 et 16 - et plus particulièrement le déclenchement du disjoncteur 12 - en cas de surintensité du courant traversant la première branche qui est indicative d'une défaillance par court-circuit de la varistance 15 alors que le réseau électrique est sous tension nominale.

Cependant, la répartition du courant de foudre à travers les deux branches par rapport à celle du courant de court-circuit peut être différente. En effet, si les contacts 14 et 16 ont généralement un comportement essentiellement résistif, la première branche a éventuellement une composante inductive - essentiellement celle du déclencheur magnétique du disjoncteur 12 - que la deuxième branche n'a pas. Cette composante inductive impacte différemment la répartition entre les deux branches pour les deux types de courant puisque leur vitesse de variation n'est pas la même : la variation du courant de foudre est plus rapide que celle du courant de court-circuit qui est lié à la fréquence du réseau d'alimentation - soit généralement 50 ou 60 Hz - de l'installation à protéger. Ce phénomène est avantageux puisqu'il aboutit à faire passer une proportion plus faible de courant dans la première branche s'agissant du courant de foudre par rapport au court-circuit, et par conséquent favorise le fait que le dispositif de protection 11 puisse être utilisé pour des courants de foudre plus élevés sans que les moyens de détection tentent d'ouvrir les contacts 14 et 16.

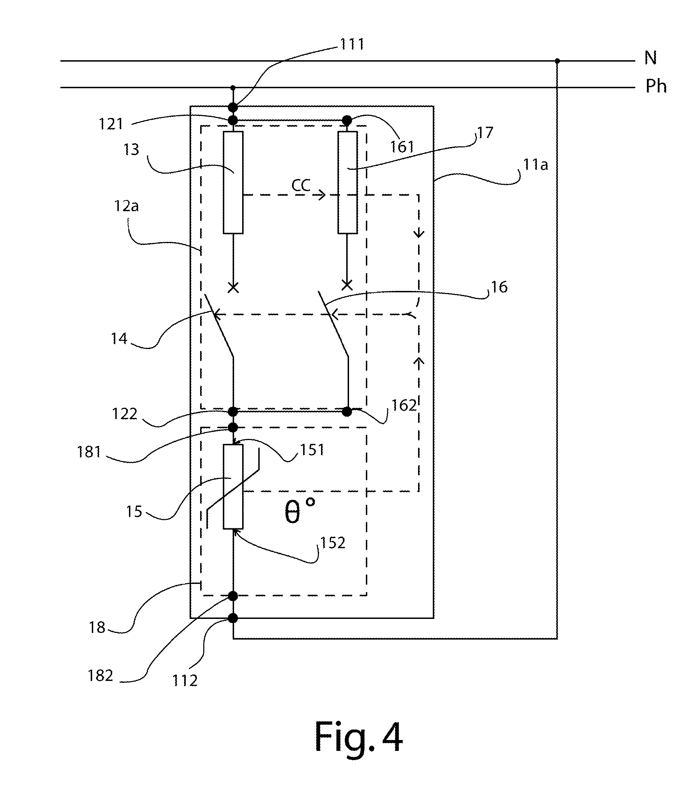

La figure 4 représente un dispositif de protection 11a d'une installation contre les surtensions transitoires selon un deuxième mode de réalisation. Ce deuxième mode de réalisation est basé sur celui du premier mode de réalisation décrit en relation avec la figure 3. De ce fait, la description faite pour le premier mode de réalisation est applicable aussi à ce deuxième mode de réalisation, sauf pour les différences qui sont exposées ci-après.

A la différence du premier mode de réalisation, il est également prévu pour la deuxième branche - laquelle comprend le contact 16 - des moyens de détection de surintensité du courant électrique traversant cette deuxième branche correspondant à une défaillance par court-circuit de la varistance 15. Ces moyens de détection sont référencés 17 sur la figure 4. Similairement aux moyens de détection 13 vis-à-vis de la première branche, les moyens de détection 17 provoquent l'ouverture simultanée des contacts 14 et 16 lorsque le courant traversant la deuxième branche dépasse un seuil indicatif de la défaillance par court-circuit de la varistance 15. Là aussi, les moyens de détection 17 comme les moyens de détection 13 peuvent comprendre une bobine ou une bobine et un bilame, similairement au cas des déclencheurs magnétiques ou magnétothermiques de disjoncteurs. Cette redondance des moyens de détection 13 et 16 permet au déconnecteur en cas de court-circuit de fonctionner correctement même en cas de défaillance de l'un des moyens de détection 13 ou 17.

Alternativement, il peut être prévu que les moyens de détection 13 provoquent l'ouverture uniquement du contact 14 lorsque le courant traversant la première branche dépasse le seuil indicatif de la défaillance par court-circuit de la varistance 15 tandis que les moyens de détection 17 provoquent l'ouverture uniquement du contact 16 lorsque le courant traversant la deuxième branche dépasse le seuil indicatif de la défaillance par court-circuit de la varistance 15.

Ce deuxième mode de réalisation permet de réaliser une répartition équilibrée à la fois du courant de foudre et du courant de court-circuit entre les deux branches, c'est-à-dire une répartition à 50% pour chacune des branches. Pour cela, il suffit que les contacts 14 et 15 soient identiques et que les moyens de détection 13 et 17 soient identiques.

Ce deuxième mode de réalisation peut aussi être mis en oeuvre très simplement avec un disjoncteur lequel est symbolisé par un rectangle en pointillés et référencé 12a. Le disjoncteur 12a est un disjoncteur bipolaire avec deux pôles protégés. Il peut s'agir d'un disjoncteur classique disponible dans le commerce. Les moyens de détection 13 constituent le déclencheur du premier pôle protégé du disjoncteur 12a, le contact 14 étant l'organe de coupure de ce premier pôle protégé. Les moyens de détection 17 constituent le déclencheur du deuxième pôle protégé du disjoncteur 12a, le contact 16 étant l'organe de coupure de ce deuxième pôle protégé. Les moyens de détection 13 et 17 peuvent aussi chacun être un déclencheur magnétique ou un déclencheur magnétothermique. Le disjoncteur 12a peut présenter les mêmes moyens de connexion 121, 122 et 161, 162 que le disjoncteur 12 aux fins de réaliser les mêmes connexions internes et externes à celui-ci. La description concernant le couplage du boîtier du disjoncteur 12 et le boîtier 18 du premier mode de réalisation s'applique à l'identique au couplage du boîtier du disjoncteur 12a et le boîtier 18 dans ce deuxième mode de réalisation.

Alternativement, ce deuxième mode de réalisation peut être mis en oeuvre avec deux disjoncteurs unipolaires (non représentés). Les moyens de détection 13 constituent alors le déclencheur du premier disjoncteur, le contact 14 étant l'organe de coupure de ce premier pôle protégé. Les moyens de détection 17 constituent le déclencheur du deuxième disjoncteur, le contact 16 étant l'organe de coupure de ce deuxième disjoncteur. Chacun des disjoncteurs peut avoir son boîtier propre, le premier présentant les moyens de connexion 121 et 122 et le deuxième les moyens de connexion 161, 162. Les boîtiers des deux disjoncteurs et le boîtier 18 sont de préférence couplés mécaniquement ensemble pour former un bloc compact. Le couplage électrique entre les différents moyens de connexion 121, 122, 161, 162 des deux disjoncteurs et les moyens de connexion 181 et 182 du boîtier 18 peut là aussi être réalisé de la façon décrite pour le premier mode de réalisation. Le déclenchement des deux disjoncteurs peut être indépendant auquel cas l'un des disjoncteurs est susceptible de déclencher plus tôt que l'autre selon les impédances respectives des deux branches et le seuil respectif de déclenchement, en particulier si les deux disjoncteurs ont des caractéristiques différentes. Mais il est préférable que le déclenchement des deux disjoncteurs soit lié pour que le premier des disjoncteurs qui déclenche provoque simultanément le déclenchement de l'autre. Ceci permet au déconnecteur en cas de court-circuit de fonctionner correctement même si l'un des déclencheurs devait être défaillant. Ce déclenchement simultané des deux disjoncteurs est obtenu par tout moyen approprié tel que en reliant mécaniquement ensemble les manettes d'armement des disjoncteurs, en utilisant un couplage mécanique venant déverrouiller le mécanisme du deuxième disjoncteur ou encore en utilisant des disjoncteurs à auxiliaire de commande dont les auxiliaires de commande ont été reliés mécaniquement ensemble.

A titre d'exemple, ce deuxième mode de réalisation peut être mis en oeuvre pour un dispositif de protection prévu pour une tension nominale de 230 VAC sous 50 Hz avec un disjoncteur bipolaire commercialisé sous la référence ABB S201MC63NA. Celui-ci présente un calibre de 63 A et une courbe de fonctionnement de type C. En branchant en parallèle les deux pôles du disjoncteur conformément à l'invention, des essais ont montré une tenue du disjoncteur - c'est-à-dire sans qu'il ne provoque l'ouverture de ses contacts - à plus de 50 kA lors de tests sous ondes de courant 8/20 conformément à la norme IEC 61643-1.

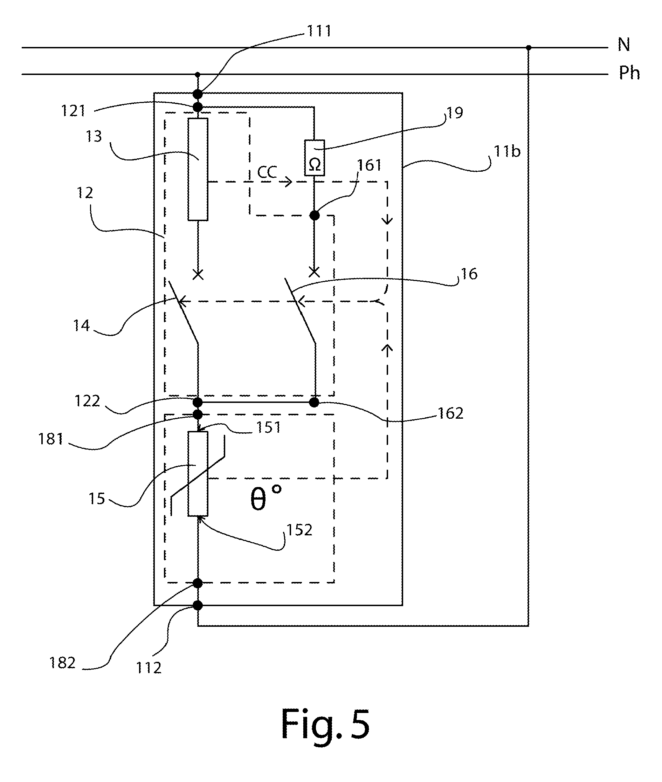

La figure 5 représente un dispositif de protection 11b d'une installation contre les surtensions transitoires selon un troisième mode de réalisation. Ce troisième mode de réalisation est basé sur celui du premier mode de réalisation décrit en relation avec la figure 3. De ce fait, la description faite pour le premier mode de réalisation est applicable aussi à ce troisième mode de réalisation, sauf pour les différences qui sont exposées ci-après.

A la différence du premier mode de réalisation, la deuxième branche présente en plus un élément 19 disposé en série avec le contact 16, cet élément ayant une certaine impédance. Ce troisième mode de réalisation est avantageux dans le cas où le contact 16 présente une impédance trop faible comparativement à celle de la première branche dont il résulterait que la fraction de courant de court-circuit traversant la première branche est trop faible pour être détectée efficacement par les moyens de détection 13. L'ajout de l'élément 19 permet alors de changer la répartition du courant pour augmenter la part de celui-ci traversant la première branche qui comprend les moyens de détection 13.

Il est avantageux que l'élément 19 soit purement résistif dans le cas où l'impédance globale de la première branche a une composante inductive - en raison par exemple des moyens de détection 13 comportant une bobine - car cela augmente la proportion de courant traversant la deuxième branche en cas de courant de foudre par rapport au courant de court-circuit, comme déjà expliqué dans le cadre du premier mode de réalisation.

Ce troisième mode de réalisation peut être mis en oeuvre à l'aide d'un disjoncteur de la même manière que pour le premier mode de réalisation, sauf à connecter l'élément 19 aux moyens de connexion 121 et 161 du disjoncteur 12. L'élément 19 peut être connecté aux moyens de connexion 121 et 161 par tout moyen approprié à l'extérieur du boîtier du disjoncteur 12. En particulier, l'élément 19 peut être logé dans le boîtier 18 qui loge aussi la varistance 15 et l'éventuel déconnecteur thermique. Dans ce cas, le boîtier 18 est préférentiellement pourvu de deux moyens de connexion additionnels tels que des bornes à vis - non représentés - auxquels est relié l'élément 19 et qui sont connectés aux moyens de connexion 121 et 161 du disjoncteur 12 par tous moyens appropriés tels que des barrettes ou fils de câblage.

L'impédance de l'élément 19 est faible. Elle est généralement comprise entre 10 milliohms et 100 milliohms à 50 Hz. Pour cela, elle peut être réalisée par la liaison des bornes 121 et 161 entre elles avec un matériau plus résistif que le cuivre - par exemple de l'inox - et/ou en augmentant la longueur de cette liaison par rapport à celle nécessaire afin d'augmenter la résistance. S'il est choisi de lui conférer une composante inductive, on peut réaliser cette liaison sous forme d'une boucle.

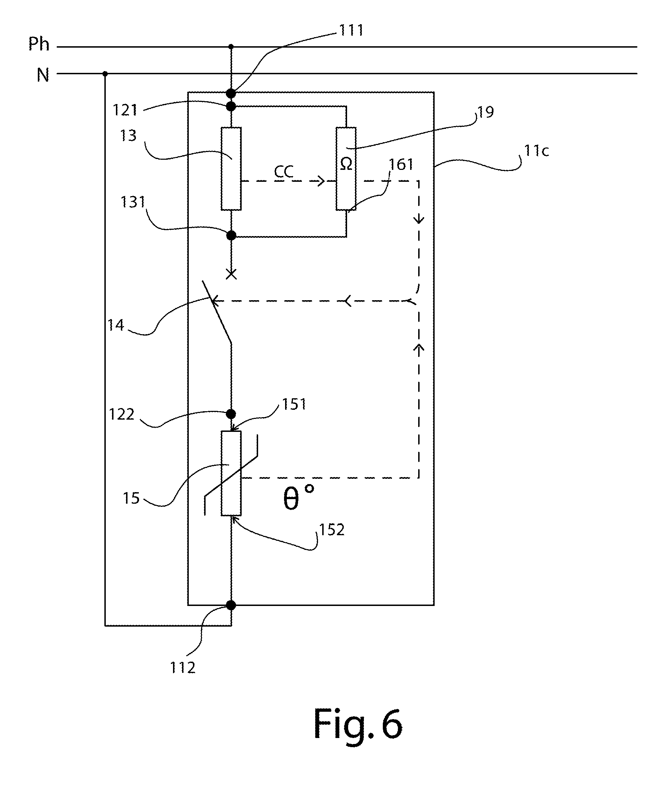

La figure 6 représente un dispositif de protection 11c d'une installation contre les surtensions transitoires selon un quatrième mode de réalisation. Ce quatrième mode de réalisation est basé sur celui du premier mode de réalisation décrit en relation avec la figure 3. De ce fait, la description faite pour le premier mode de réalisation est applicable aussi à ce quatrième mode de réalisation, sauf pour les différences qui sont exposées ci-après.

A la différence du premier mode de réalisation, le déconnecteur en cas de court-circuit ne comprend plus qu'un seul contact électrique, à savoir le contact 14. Celui-ci est disposé en série avec la varistance 15. Le contact 14 sert à lui seul à déconnecter le premier pôle 151 de la varistance 15 du premier moyen de connexion 111 du dispositif de protection 11c en cas de défaillance par court-circuit de la varistance 15. En outre, le premier pôle 151 de la varistance est relié électriquement au premier moyen de connexion 111 du dispositif de protection 11c par le biais de deux branches reliées en parallèle entre elles. A la différence du premier mode de réalisation, la première branche ne contient plus le contact 14, mais seulement les moyens de détection 13. Quant à la deuxième branche, elle comprend uniquement un élément 19 présentant une impédance. Autrement dit, l'élément 19 et les moyens de détection 13 sont reliés en parallèle entre eux. L'impédance de l'élément 19 est choisie en considération de l'impédance des moyens de détection pour obtenir la répartition du courant de foudre et du courant de court-circuit souhaitée à travers les deux branches. Les considérations exprimées au sujet du choix de l'impédance de l'élément 19 pour le troisième mode de réalisation s'appliquent similairement à ce quatrième mode de réalisation.

Comme dans le premier mode de réalisation, les moyens de détection 13 ont pour fonction de détecter une surintensité du courant électrique traversant cette première branche correspondant à une défaillance par court-circuit de la varistance 15. En condition normale de fonctionnement du dispositif de protection 11c, le contact 14 est fermé. Lorsque le courant traversant la première branche dépasse le seuil indicatif de la défaillance par court-circuit de la varistance 15, les moyens de détection 13 provoquent l'ouverture du contact 14, ce qui a pour effet de déconnecter le premier pôle 151 de la varistance 15 du premier moyen de connexion 111 du dispositif de protection 11c.

Dans le cas où le dispositif de protection 11c comprend un déconnecteur thermique , celui-ci peut être prévu pour assurer la déconnexion de la varistance 15 en provoquant l'ouverture du contact 14.

Ce quatrième mode de réalisation peut aussi être mis en oeuvre avec un disjoncteur, non symbolisé sur la figure 6. Il s'agit alors d'un disjoncteur unipolaire. Dans ce cas, les moyens de détection 13 constituent le déclencheur du disjoncteur et le contact 14 est l'organe de coupure du disjoncteur. Il peut s'agir classiquement d'un déclencheur magnétique ou d'un déclencheur magnétothermique. Le disjoncteur est adapté pour permettre la connexion de l'élément 19 à la liaison électrique entre les moyens de détection 13 et le contact 14, ce qui est symbolisé par le point 131 sur la figure 6. En pratique, l'élément 19 peut être logé à l'intérieur du boîtier du disjoncteur. Dans ce cas, les liaisons entre l'élément 19 et les moyens de détection 13 pour les monter en parallèle entre eux peuvent être réalisées entièrement à l'intérieur du boîtier du disjoncteur. En variante, l'élément 19 peut être extérieur au boîtier du disjoncteur. Dans ce cas, l'élément 19 peut être logé dans le boîtier - référencé 18 dans la figure 3 du premier mode de réalisation - qui loge la varistance 15 et l'éventuel déconnecteur thermique. Ce dernier boîtier comprend alors deux moyens de connexion supplémentaires tels que des bornes à vis auxquels est relié l'élément 19 tandis que le disjoncteur comprend, outre ses moyens de connexion 121 , 122, un moyen de connexion supplémentaire - tel qu'une borne à vis - correspondant au point 131, ces moyens de connexion supplémentaires étant reliés entre eux par tous moyens appropriés tels que des barrettes ou des fils de câblage.

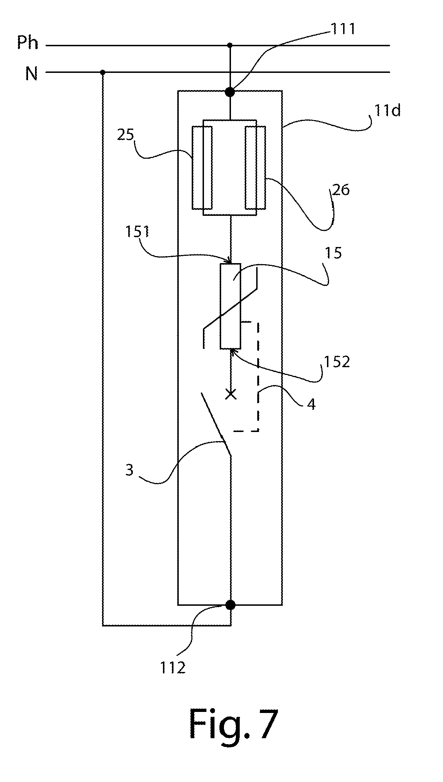

La figure 7 représente un dispositif de protection 11d d'une installation contre les surtensions transitoires selon un cinquième mode de réalisation. Le dispositif de protection 11d comprend un premier moyen de connexion 111 et un second moyen de connexion 112 grâce auxquels il est relié, dans l'exemple illustré, à une phase Ph et à un neutre N du réseau électrique d'alimentation de l'installation électrique à protéger. Ces premier et second moyens de connexion 111, 112 peuvent être de tout type approprié tel que des bornes à vis montées sur un boîtier contenant les différents composants du dispositif de protection 11d.

Le dispositif de protection 11d comprend une varistance 15 dont un premier pôle 151 est relié au premier moyen de connexion 111 du dispositif de protection 11d et le deuxième pôle 152 au deuxième moyen de connexion 112 du dispositif de protection 11d. Plus précisément, le premier pôle 151 de la varistance 15 est relié au premier moyen de connexion 111 du dispositif de protection 11 par le biais de deux branches reliées en parallèle entre elles. Dans ce cinquième mode de réalisation, les moyens sensibles au courant tels que mentionnés plus haut sont prévus pour chacune des deux branches et sont sous la forme d'un fusible respectif 25, 26. Le déconnecteur en cas de court-circuit est défini par ces deux fusibles reliés en parallèle entre eux. Il s'agit préférentiellement de fusibles qui sont chacun aptes à être traversé par un courant de foudre - autrement dit, sans fondre lorsqu'ils sont individuellement traversés par un tel courant de foudre - et qui pourraient donc chacun être utilisé à la manière de l'art antérieur décrit en relation à la figure 2. Le courant traversant la varistance 15 se divise entre les deux fusibles 25 et 26. La proportion de répartition du courant entre les deux fusibles dépend des impédances respectives des deux fusibles 25 et 26. Si les deux fusibles 25, 26 sont identiques, chaque fusible 25, 26 est traversé par la moitié du courant traversant la varistance 15. L'ensemble du dispositif de protection 11d peut être logé dans un même boîtier. Les fusibles 25, 26 sont avantageusement sélectionnés pour assurer la répartition du courant de foudre entre les branches dans les proportions décrites auparavant.

En condition normale de fonctionnement du dispositif de protection 11d, les fusibles 25, 26 sont intègres et donc la varistance 15 est connectée au réseau électrique.

En cas de défaillance par court-circuit de la varistance 15, le courant de court-circuit de la varistance 15 se divise entre les deux fusibles 25 et 26. Les deux fusibles 25 et 26 sont calibrés pour fondre tous les deux en cas de défaillance par court-circuit de la varistance 15. Dans ce cas, le premier pôle 151 de la varistance 15 est déconnectée du premier moyen de connexion 111 du dispositif de protection 11d. Pour cela, les deux fusibles peuvent présenter chacun un seuil de courant au-delà duquel ils fondent et qui est indicatif de la défaillance par court-circuit de la varistance 15. Alternativement, il peut être prévu que l'un des fusibles 25 et 26 fonde avant l'autre. Par exemple, le fusible qui fond en premier est calibré pour fondre lorsque le courant le traversant - qui est une fraction donnée du courant total traversant la varistance 15 - dépasse un premier seuil qui est indicatif de la défaillance par court-circuit de la varistance 15. A ce moment là, le courant de court-circuit de la varistance 15 traverse intégralement l'autre fusible. Il suffit donc que le deuxième fusible fonde lorsque le courant le traversant dépasse un deuxième seuil qui peut être supérieur au premier seuil, tout en étant inférieur au courant de court-circuit.

En cas de surtension transitoire par exemple lié à un impact de foudre, la varistance 15 devient passante et le courant transitoire la traversant, en particulier le courant de foudre, se divise entre les deux fusibles 25, 26. Chacun des fusibles présente une insensibilité aux surintensités transitoires jusqu'à un certain niveau. Là aussi le dispositif de protection 11d peut écouler une surintensité transitoire plus importante que si un tel fusible était traversé par le courant de foudre total comme dans l'art antérieur de la figure 2.

Dans le cas où il est prévu un déconnecteur thermique, il peut être réalisé de manière connue, notamment avec un contact 3 et des moyens de détection de l'emballement thermique - symbolisés par le trait interrompu 4 - tels que décrits en relation avec la figure 2.

Bien entendu, la présente invention n'est pas limitée aux exemples et au mode de réalisation décrits et représentés, mais elle est susceptible de nombreuses variantes accessibles à l'homme de l'art.

Ainsi, dans les différents modes de réalisation précédemment décrits, le premier pôle 151 de la varistance 15 était relié au moyen de connexion 111 par le biais de deux branches reliées en parallèle entre elles entre lesquelles le courant traversant la varistance 15 se divise. En variante, il peut être prévu d'avoir que le premier pôle 151 de la varistance 15 soit relié au moyen de connexion 111 par le biais de plus de deux branches reliées en parallèle entre elles entre lesquelles le courant traversant la varistance 15 se divise. Par exemple, concernant le premier mode de réalisation - cf. figure 3 - la ou les branches supplémentaires pourront comprendre chacune un contact seul ou encore un contact et des moyens de détection similaires aux moyens 13. Concernant le deuxième mode de réalisation - cf. figure 4 - la ou les branches supplémentaires pourront comprendre chacune un contact et des moyens de détection similaires aux moyens 13 et 17. Concernant le troisième mode de réalisation - cf. figure 5 - la ou les branches supplémentaires pourront comprendre chacune un contact et un élément présentant une impédance similairement à l'élément 19. Concernant le quatrième mode de réalisation - cf. figure 7 - la ou les branches supplémentaires pourront comprendre chacune un fusible similaire aux fusibles 25 et 26. Bien entendu, les seuils de détection ou de fusion des moyens de détection ou des fusibles sont définis dans ce cas en tenant dûment compte de la répartition résultante du courant à travers les différentes branches.

Les branches reliées en parallèle entre elles peuvent d'ailleurs être conçues pour mélanger les différents modes de réalisation. En particulier, une ou plusieurs des branches peuvent comprendre chacune un fusible tandis qu'un contact électrique respectif est disposé dans une ou plusieurs autres branches et/ou en série avec la varistance comme pour la figure 6. Des moyens de détection sont prévus pour au moins une de ces branches, ces moyens étant prévu pour détecter une surintensité du courant électrique traversant cette branche correspondant à une défaillance par court-circuit de la varistance. Là-aussi, chacun des fusibles est avantageusement apte à être traversé par un courant de foudre. En cas de défaillance par court-circuit de la varistance, un de ses pôles est déconnecté du moyen de connexion respectif du fait que ce ou ces fusibles fondent et que ces moyens de détection font passer le ou les contacts électriques dans la position Là aussi, les contacts électriques et les moyens de détection peuvent être procurés par un ou plusieurs disjoncteurs classiques et éventuellement un ou plusieurs interrupteurs accouplés au(x) disjoncteur(s) comme mentionné plus haut. La répartition de courant souhaitée peut être obtenue par un choix approprié du ou des fusibles, disjoncteurs et interrupteurs selon leur impédance. Un élément additionnel présentant une impédance - comme l'élément 19 de la figure 5 - peut être disposé dans une ou plusieurs branches pour modifier la distribution de courant à travers les différentes branches. Les fusibles peuvent être logés dans le même boîtier que la varistance tandis que le ou les disjoncteurs et les interrupteurs éventuels peuvent avoir chacun classiquement leur boîtier propre, de faon similaire aux différents modes de réalisation décrits plus haut.

Il peut même être prévu d'avoir une branche dotée d'un fusible et une ou plusieurs autres munies de contacts fournis par exemple par un interrupteur unipolaire ou multipolaire dont l'ouverture est provoquée par la fusion du fusible par le biais de moyens mécaniques appropriés tels que décrit dans EP-A-1 607 995.

Il peut aussi être prévu de déconnecter les deux pôles 151, 152 de la varistance 15 des moyens de connexion 111, 112 du dispositif de protection en cas de défaillance par court-circuit de la varistance 15 au lieu d'un seul. Pour cela, il suffit par exemple d'interposer un contact en série entre le deuxième pôle 152 de la varistance 15 et le deuxième moyen de connexion 112 du dispositif de protection, lequel contact est commandé simultanément que le contact 14 et/ou le contact 16. Ce contact peut être fourni par exemple par un pôle supplémentaire du disjoncteur 12 ou 12a.

Lorsque le dispositif de protection est logé dans un boîtier unique, celui-ci est avantageusement prévu pour pouvoir être monté sur les rails normalisés des armoires électriques. Il en va de même lorsque le dispositif de protection est réalisé sous forme d'un bloc compact assemblage mécanique de plusieurs boîtiers logeant des composants respectifs, tels que le boîtier 18 et le boîtier du disjoncteur 12 ou 12a, ou encore le boîtier d'un éventuel interrupteur associé à celui d'un disjoncteur et le boîtier 18.

Par ailleurs, bien que le dispositif de protection ait été décrit en relation avec un réseau électrique monophasé, il peut aussi être adapté à un réseau triphasé ou multiphasé en multipliant par exemple le nombre de dispositifs de protection qui sont connectés chacun, soit entre une phase respective et le neutre, soit entre deux phases respectives.

**Revendications**

1. Dispositif de protection (11) destiné à protéger une installation électrique contre des surtensions transitoires, comprenant :

- deux moyens de connexion (111, 112) pour connecter le dispositif de protection à l'installation électrique ;
- au moins une varistance (15) présentant deux pôles (151, 152) reliés chacun à l'un respectif des deux moyens de connexion (111, 112) ;
- un déconnecteur (12 ; 12a ; 25, 26) pour provoquer la déconnexion d'au moins l'un des deux pôles de la varistance du moyen de connexion respectif en cas de défaillance par court-circuit de la varistance ;

dans lequel :

- l'un (151) des deux pôles de la varistance est relié au moyen de connexion (111) respectif par le biais d'au moins deux branches reliées en parallèle entre elles pour que le courant traversant la varistance se divise entre ces branches ; et
- le déconnecteur comprend, pour au moins une de ces branches, des moyens (13 , 17 ; 25, 26) sensibles au courant traversant cette branche pour provoquer ladite déconnexion en considération seulement du courant traversant cette branche, ces moyens provoquant la déconnexion en cas de surintensité du courant traversant cette branche correspondant à une défaillance par court-circuit de la varistance, ces moyens présentant une insensibilité aux surintensités transitoires du courant traversant ladite branche jusqu'à un certain niveau.

2. Dispositif de protection selon la revendication 1, dans lequel :

- le déconnecteur comprend au moins un contact électrique (14, 16), l'un des deux pôles de la varistance (15) étant relié au moyen de connexion respectif (111 ; 112) par le biais dudit au moins un contact électrique, ledit au moins un contact électrique étant susceptible de passer d'une position fermée à une position ouverte pour déconnecter ledit pôle du moyen de connexion respectif (111 ; 112), ledit au moins un contact électrique (14, 16) étant apte à couper le courant traversant ladite au moins une varistance (15) en cas de défaillance par court circuit de la varistance (15), et
- pour ladite au moins une de ces branches, les moyens sensibles à l'intensité du courant traversant cette branche sont des moyens de détection (13, 17) de surintensité du courant électrique traversant cette branche correspondant à une défaillance par court-circuit de la varistance, les moyens de détection étant prévus pour faire passer ledit au moins un contact électrique (14, 16) dans la position ouverte en cas de détection de surintensité, les moyens de détection (13) présentant ladite insensibilité aux surintensités transitoires pour ne faire passer ledit au moins un contact électrique (14, 16) à la position ouverte que si les surintensités transitoires du courant traversant cette branche dépassent ledit certain niveau.

**3.** Dispositif de protection selon la revendication 2, dans lequel un tel contact électrique (14, 16) est disposé dans chacune desdites au moins deux branches, les moyens de détection (13) étant prévus pour faire passer lesdits contacts électriques (14, 16) dans la position ouverte pour déconnecter ledit pôle du moyen de connexion respectif (111 ; 112) en cas de détection d'une surintensité du courant électrique dans ladite au moins une de ces branches.

**4.** Dispositif de protection selon la revendication 3, comprenant de tels moyens de détection de surintensité (13, 17) du courant électrique pour chacune desdites au moins deux branches, lesdits moyens de détection (13, 17) de chacune desdites au moins deux branches étant prévus pour faire passer le contact électrique (14, 16) disposé dans ladite branche dans la position ouverte en cas de détection d'une surintensité du courant électrique dans ladite branche.

**5.** Dispositif de protection selon la revendication 3, dans lequel le déconnecteur comprend de tels moyens de détection de surintensité (13) du courant électrique que pour une seule desdites au moins deux branches, les moyens de détection (13) étant prévus pour faire passer lesdits contacts électriques (14, 16) dans la position ouverte pour déconnecter ledit pôle du moyen de connexion respectif (111 ; 112) en cas de détection d'une surintensité du courant électrique dans ladite branche.

**6.** Dispositif de protection selon la revendication 5 dans lequel au moins une parmi lesdites au moins deux branches ne comprend que ledit contact électrique (16) disposé dans cette branche.

**7.** Dispositif de protection selon la revendication 5, dans lequel au moins une parmi lesdites au moins deux branches est dépourvue de tels moyens de détection de surintensité (13) du courant électrique et comprend un élément (19) disposé en série avec le contact électrique (16) disposé dans cette branche, ledit élément présentant une impédance.

**8.** Dispositif de protection selon la revendication 7, dans lequel l'impédance est choisie pour que ladite branche comprenant cet élément (19), présente globalement une valeur d'inductance moindre que ladite branche comprenant de tels moyens de détection de surintensité (13) du courant électrique.

**9.** Dispositif de protection selon la revendication 1, dans lequel :

- pour au moins une desdites branches, lesdits moyens sensibles à l'intensité du courant traversant cette branche sont un fusible ; la fusion du fusible empêchant le passage du courant à travers cette branche ;
- le déconnecteur comprend au moins un contact électrique susceptible de passer d'une position fermée à une position ouverte, ledit au moins un contact électrique étant disposé dans une autre desdites branches ou en série avec la varistance ; et
- pour au moins une desdites branches, les moyens sensibles à l'intensité du courant traversant cette branche sont des moyens de détection de surintensité du courant électrique traversant cette branche correspondant à une défaillance par court-circuit de la varistance, les moyens de détection étant prévus pour faire passer ledit au moins un contact électrique dans la position ouverte en cas de détection de surintensité, les moyens de détection présentant ladite insensibilité aux surintensités transitoires pour ne faire passer ledit au moins un contact électrique à la position ouverte que si les surintensités transitoires du courant traversant cette branche dépassent ledit certain niveau, lesdits moyens de détection étant soit distinct dudit fusible, soit constitué par ledit fusible.

**10.** Dispositif de protection selon l'une quelconque des revendications 2 à 9, dans lequel le déconnecteur comprend au moins un disjoncteur (12; 12a) et optionnellement au moins un interrupteur couplé mécaniquement au disjoncteur pour que le déclenchement du disjoncteur provoque l'ouverture dudit au moins un interrupteur, et dans lequel :

- pour chacune desdites au moins deux branches comprenant de tels moyens de détection de surintensité (13), lesdits moyens de détection de surintensité de courant électrique constituent le déclencheur d'un organe de coupure d'un pôle du disjoncteur ; et
- ledit au moins un contact électrique :

   • soit constitue un organe de coupure d'un pôle du disjoncteur ;
   • soit fait partie d'un pôle correspondant dudit au moins un interrupteur.

**11.** Dispositif de protection selon la revendication 10 et l'une quelconque des revendications 3 à 8, dans lequel :

- pour chacune desdites au moins deux branches comprenant de tels moyens de détection de surintensité (13 ; 17), le disjoncteur présente un pôle correspondant protégé par un déclencheur et un organe de coupure, le déclencheur étant constitué par lesdits moyens de détection de surintensité (13 ; 17) et l'organe de coupure étant constitué par le contact électrique (14 ; 16) disposé dans cette branche ;

- pour chacune desdites au moins deux branches dépourvue de tels moyens de détection de surintensité (13 ; 17), le contact électrique (16) de cette branche :

    • soit constitue l'organe de coupure d'un pôle correspondant du disjoncteur ;
    • soit fait partie d'un pôle correspondant dudit au moins un interrupteur.

**12.** Dispositif selon la revendication 10 ou 11, comprenant un premier boîtier logeant ladite au moins une varistance et le cas échéant le deuxième déconnecteur, dans lequel

    - ledit au moins un disjoncteur a un deuxième boîtier propre,
    - le cas échéant, ledit au moins un interrupteur a un troisième boîtier propre, lesdits boîtiers étant couplés mécaniquement ensemble, lesdits boîtiers présentant chacun des moyens d'interconnexion électrique pour connecter électriquement entre eux ladite au moins une varistance, ledit au moins un disjoncteur et le cas échéant ledit au moins un interrupteur.

**13.** Dispositif de protection selon la revendication 1, dans lequel pour ladite au moins une de ces branches, les moyens sensibles à l'intensité du courant traversant cette branche est un fusible (25 ; 26) apte à être traversé par un courant de foudre.

**14.** Dispositif de protection selon la revendication 13, dans lequel un tel fusible est disposé dans chacune desdites au moins deux branches, la fusion desdits fusibles provoquant ladite déconnexion d'au moins l'un des deux pôles de la varistance (15) du moyen de connexion respectif en cas de défaillance par court-circuit de la varistance.

**15.** Dispositif de protection selon l'une quelconque des revendications 1 à 14, conçu pour assurer une répartition du courant de foudre modélisé en onde 8/20 ou en onde 10/350 pour que chacune des branches soit traversée par une partie de courant correspondant à :

$$Imax/\text{n} \ +/- \ 0,75 \ Imax/\text{n}$$

$$ou$$

$$Iimp/\text{n} \ +/- \ 0,75 \ Iimp/\text{n}$$

et plus préférentiellement à :

$$Imax/\text{n} \ +/- \ 0,5 \ Imax/\text{n}$$

$$ou$$

$$Iimp/\text{n} \ +/- \ 0,5 \ Iimp/\text{n}$$

avec :

    - *Imax* : le courant maximal de décharge en onde 8/20 conformément à la norme IEC 61643-1 prescrit pour le dispositif de protection contre les surtensions en cause ;
    - *Iimp* : le courant de choc en onde 10/350 conformément à la norme IEC 61643-1 prescrit pour le dispositif de protection contre les surtensions en cause ; et
    - n : le nombre desdites branches reliées en parallèle entre elles à travers lesquelles le courant se divise.

Fig. 1

Fig. 2

Fig. 3

Fig. 4

Fig. 5

Fig.6

Ph

N

111

11d

25

26

151

15

152

4

3

112

# Fig.7

Europäisches
Patentamt

European
Patent Office

Office européen
des brevets

**RAPPORT DE RECHERCHE EUROPEENNE**

Numéro de la demande

EP 10 17 0098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2006 034404 A1 (DEHN & SOEHNE [DE]) 13 décembre 2007 (2007-12-13) * alinéa [0044] - alinéa [0048]; figures 1-3,9 * ----- | 1,9,13, 14 | INV. H01H83/10 H02H9/04 ADD. H01H85/44 H01H85/46 |
| A | EP 0 350 477 A (FELTEN & GUILLEAUME AG OESTER [AT]) 10 janvier 1990 (1990-01-10) * colonne 8, ligne 34 - ligne 43 * * colonne 8, ligne 55 - colonne 9, ligne 6; figures 9,11 * ----- | 1-12 | |
| A | AT 405 777 B (BIEGELMEIER GOTTFRIED [AT]) 25 novembre 1999 (1999-11-25) * page 6, ligne 7 - ligne 15; revendication 8; figure 8 * ----- | 1-12 | |
| A,D | EP 1 447 831 A (HAGER ELECTRO S A S SOC PAR AC [FR]) 18 août 2004 (2004-08-18) * figures 1-3,6 * ----- | 1-12 | |
| A,D | EP 0 987 803 A (SOULE MATERIEL ELECTR [FR]) 22 mars 2000 (2000-03-22) * le document en entier * ----- | 12 | DOMAINES TECHNIQUES RECHERCHES (IPC) H01H H02H |
| A | EP 1 953 787 A (SCHNEIDER ELECTRIC IND S A S [FR]) 6 août 2008 (2008-08-06) * alinéas [0049] - [0052] * ----- | 12 | |

Le présent rapport a été établi pour toutes les revendications

| Lieu de la recherche | Date d'achèvement de la recherche | Examinateur |
|---|---|---|
| La Haye | 20 septembre 2010 | Starck, Thierry |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 17 0098

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2010

| Document brevet cité au rapport de recherche | | Date de publication | Membre(s) de la famille de brevet(s) | | Date de publication |
|---|---|---|---|---|---|
| DE 102006034404 | A1 | 13-12-2007 | EP 2025049 | A1 | 18-02-2009 |
| | | | WO 2007141104 | A1 | 13-12-2007 |
| | | | JP 2009540777 | T | 19-11-2009 |
| | | | RU 2008149083 | A | 20-07-2010 |
| EP 0350477 | A | 10-01-1990 | AT 391571 | B | 25-10-1990 |
| AT 405777 | B | 25-11-1999 | AT 147202 | T | 15-01-1997 |
| | | | DE 59207785 | D1 | 13-02-1997 |
| | | | EP 0497752 | A2 | 05-08-1992 |
| | | | ES 2096741 | T3 | 16-03-1997 |
| EP 1447831 | A | 18-08-2004 | AT 333142 | T | 15-08-2006 |
| | | | DE 602004001468 | T2 | 08-02-2007 |
| | | | ES 2268602 | T3 | 16-03-2007 |
| | | | FR 2851369 | A1 | 20-08-2004 |
| EP 0987803 | A | 22-03-2000 | DE 69904274 | D1 | 16-01-2003 |
| | | | DE 69904274 | T2 | 28-08-2003 |
| | | | FR 2783365 | A1 | 17-03-2000 |
| EP 1953787 | A | 06-08-2008 | AR 065122 | A1 | 20-05-2009 |
| | | | AU 2008200476 | A1 | 21-08-2008 |
| | | | BR PI0800086 | A | 16-09-2008 |
| | | | CN 101236864 | A | 06-08-2008 |
| | | | FR 2912253 | A1 | 08-08-2008 |
| | | | US 2008186643 | A1 | 07-08-2008 |
| | | | ZA 200800238 | A | 29-04-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0716493 A
- EP 0987803 A
- EP 0905839 A
- FR 2873510 A
- EP 1447831 A
- EP 1607995 A
- FR 2008001777 W
- EP 350477 A
- AT 405777 B
- DE 102006034404 A
- EP 0350477 A